# EUROPÄISCHE PATENTSCHRIFT

(11) **EP 3 271 597 B1**
(45) Veröffentlichungstag und Bekanntmachung des Hinweises auf die Patenterteilung: **10.03.2021**
(21) Anmeldenummer: 15710783.0
(22) Anmeldetag: 18.03.2015
(51) Int. Cl.: F16C 17/10, F01D 25/16, F02B 37/00, F16C 17/03

(54) **ABGASTURBOLADER**
TURBOCHARGER
TURBOCOMPRESSEUR À GAZ D'ÉCHAPPEMENT

(43) Veröffentlichungstag der Anmeldung: 24.01.2018
(60) Teilanmeldung: 18184749.2
(73) Patentinhaber: BMTS Technology GmbH & Co. KG, 70376 Stuttgart (DE); Berger, Martin, 75038 Oberderdingen (DE)
(72) Erfinder: KLEINSCHMIDT, Rüdiger, 69245 Bammental (DE); KROPP, Martin, 73095 Albershausen (DE); JENNES, Jörg, 67278 Bockenheim (DE); BERGER, Martin, 75038 Oberderdingen (DE)
(74) Vertreter: Herrmann, Jochen
(86) Internationale Anmeldenummer: PCT/EP2015/055715
(87) Internationale Veröffentlichungsnummer: WO 2016/146189

(56) Entgegenhaltungen:
- WO-A1-2014/105377
- DE-A1-102008 059 598
- JP-A- H0 932 849
- JP-A- H1 068 416
- JP-A- H1 078 029
- JP-U- S5 594 914

## Beschreibung

Die Erfindung betrifft einen Abgasturbolader mit einem hydrodynamischen Gleitlager mit einem Rotor und einem Stator, wobei der Rotor gegenüber dem Stator drehbar ist, wobei eine Rotor-Lagerfläche einer Gegenfläche des Stators zur hydrodynamischen Druckerzeugung im Bereich eines konvergierenden Spaltes gegenübersteht.

Die Erfindung betrifft weiterhin eine Lageranordnung mit einem hydrodynamischen Gleitlager.

Die Erfindung betrifft schließlich ein hydrodynamisches Gleitlager.

Rotierende Maschinenelemente, wie z.B. Wellen, Laufrollen, Zahn- oder Pumpenräder benötigen eine Führung in radialer und axialer Richtung um Kräfte und Drehmomente übertragen zu können. Diese Aufgabe kann von hydrodynamisch wirkenden Gleitlagern übernommen werden. Die Funktion dieses Lagertyps basiert auf dem physikalischen Prinzip der hydrodynamischen Druckerzeugung. Zwischen dem Rotor und dem Stator ist bei hydrodynamischen Gleitlagern ein geeigneter Schmierstoff gehalten. Bei einer Drehbewegung des Rotors relativ zum Stator entstehen im Schmierstoff Scherkräfte, die diesen dann mit einer bestimmten Geschwindigkeit durch das Lager transportieren. Bei einem konvergierenden Lagerspalt ergibt sich hieraus ein hydrodynamischer Druckanstieg, bei divergierendem Spaltverlauf - im Anschluss an den konvergierenden Lagerspalt, entsteht ein Druckabfall. Ist die Relativgeschwindigkeit zwischen Rotor und Stator ausreichend hoch, baut sich durch den hydrodynamischen Druck eine ausreichend dicke Schmierstoffschicht auf, welche die beiden Gleitpartner voneinander trennt. Die Reibung findet in diesem Betriebszustand in der Schmierstoffschicht statt (Flüssigkeitsreibung). Die so erzeugten hydrodynamischen Drücke halten in Verbindung mit der eingesetzten Fläche den äußeren Kräften das Gleichgewicht und beschreiben die Tragfähigkeit des Gleitlagers. Zur Erzeugung des hydrodynamischen Drucks wird keine zusätzliche Energie in Form von Druckarbeit bzw. ein Schmierstoffvolumen, welches mit einem bestimmten Druck über Nuten oder Taschen zugeführt wird, benötigt. Die Tragfähigkeit ergibt sich aus den Betriebsgrößen. Die Grundlagen zur nummerischen Berechnung des hydrodynamischen Drucks sind in der DIN 31562 Teil 1 (DIN Taschenbuch 198; Gleitlager 2; Beuth Verlag GmbH; Berlin, Köln 1991) dargestellt.

Zum Stand der Technik gehören zwei grundsätzliche Lagertypen:
1. Hydrodynamische Radialgleitlager
   Hydrodynamische Radialgleitlager werden häufig in Form von zylindrischen Buchsen als segmentierte Variante oder als Kippsegmentlager ausgeführt. Siehe hierzu (DIN 31562 Teil 2 und VDI-Richtlinien 2204). Die hydrodynamisch wirksamen Elemente (z.B. Segmente) des Gleitlagers sind zylindrisch und damit parallel zur Rotationsachse angeordnet. Der konvergierende Spaltverlauf ergibt sich aus der exzentrischen Lage vom Rotor zum Stator.
2. Hydrodynamische Axialgleitlager
   Hydrodynamische Axialgleitlager werden in Form einer Anlaufscheibe mit diversen Nuten bzw. Oberflächenmodifikationen in Form von Staurändern, Keilflächen oder Spiralrillen ausgebildet. Sie können auch als so genanntes Kippsegment-Lager gestaltet sein (siehe hierzu DIN 31563 Teil 1 bis 3; DIN 31564 Teil 1 bis 3). Die Anordnung des Axialgleitlagers erfolgt dabei orthogonal zur Rotationsachse, mit einer in der Regel rotierenden Spurscheibe als Gegenlaufpartner. Der für die hydrodynamische Druckerzeugung benötigte konvergierende Spaltverlauf ergibt sich aus der Gestaltung der Oberflächenstrukturen (Taschen, Rampen, etc.), durch die Neigung der kippbeweglichen Segmente oder einem Winkelversatz zwischen Lager zur Spurscheibe.

Wenn bei einer technischen Lösung sowohl radiale als auch axiale Lasten entstehen, so müssen beide vorgenannten Lagertypen zum Einsatz kommen. Die Axiallasten werden dann über ein Axialgleitlager und die Radiallasten über das Radialgleitlager abgetragen. Eine derartige Lösung ist in der DE 4217268 C2 beschrieben. Die beiden Lagertypen sind dann jeweils getrennt voneinander zu berechnen und auszulegen, wodurch sowohl bei der Konstruktion als auch bei der Produktion entsprechend hohe Kosten entstehen.

Aus diesem Grund werden bei solchen Lastfällen häufig hydrostatische Gleitlager eingesetzt, die entsprechend ausgelegt sind. Dabei wird der Einsatz einer Druckpumpe erforderlich die, wie vorstehend erwähnt, einen permanenten Energiebedarf hat. Derartige Lösungen sind in der Druckschrift US 2,710,234 A beschrieben.

Eine weitere Möglichkeit besteht darin sogenannte Spiralrillen in die Rotor- Lagerfläche einzubringen um darüber einen Druckaufbau zu erzeugen. Derartige Lösungen sind in der Druckschrift US 3,265,452 A beschrieben. Solche Rillen bedingen einen zusätzlichen Fertigungsaufwand.

Eine weitere Möglichkeit radiale als auch axiale Lasten zu tragen besteht darin, sogenannte sphärischen Lager oder Gelenklager (EP1482189A1) bzw. Kugelgelenke (DE10028984C2) einzusetzen. Diese sind jedoch nicht für stationär hohe Gleitgeschwindigkeiten durch Rotation des Gegenkörpers (Rotors) um seine Achse konzipiert. Vielmehr besteht die Aufgabe solcher Lager in der kippbeweglichen bzw. ausgleichenden Lagerung von Wellenversatz. Bekannt sind hier Gelenkaugen, wie sie z.B. bei Hydraulikzylindern eingesetzt werden. Die Gleiche Funktion übernehmen auch Hüftgelenksprothesen z.B. nach (WO0154613A2).

Aus der DE 10 2008 059 598 A1 ist ein Abgasturbolader bekannt. Dieser weist eine Welle auf, die an ihren Enden ein Turbinenrad bzw. ein Verdichterrad trägt. Die Welle ist mittels zweier hydrodynamischer Gleitlager in einem Gehäuse gelagert. Diese sind in Form von Kegellagern ausgeführt.

Ein weiterer Abgasturbolader ist in der WO 2014/105377 A1 beschrieben, die die Merkmale des Oberbegriffs der Ansprüche 1 und 2 offenbart.

Es ist Aufgabe der Erfindung, einen Abgasturbolader bzw. ein hydrodynamisches Gleitlager oder eine Lageranordnung bereitzustellen, wobei verbesserte Anwendungseigenschaften erreicht sind.

Diese Aufgabe wird dadurch gelöst, dass die Rotor-Lagerfläche des Rotors und/oder die Gegenfläche des Stators bei einem Schnitt längs und durch die Rotationsachse in Schnittansicht eine durchgehende Lagerkontur bildet, die aus wenigstens zwei Konturabschnitten gebildet ist, die als eine Gerade und eine Wölbung ausgebildet sind. In einer Ausführung (nicht beansprucht) kann es auch vorgesehen sein, dass die Rotorlagerfläche und/oder die Gegenfläche konvex und oder konkav gewölbt sind um hydrodynamische Tragfähigkeiten sowohl in radialer als auch axialer Richtung zu erzeugen.

Erfindungsgemäß lassen sich mithin mit der durchgehenden und im Querschnitt variierenden Lagerkontur im konvergierenden Spalt Druckbereiche erzeugen, die sowohl die axialen als auch die radialen Lasten abtragen. Dadurch entstehen in einem hydrodynamischen Gleitlager drei-dimensionale hydrodynamische Tragfähigkeiten. Die Erfindung nutzt den physikalischen Effekt, wonach der lokal erzeugte hydrodynamische Druck normal auf eine Fläche wirkt. Daraus ergeben sich lokale Tragfähigkeiten. Liegt nun gemäß der Erfindung eine Oberfläche zugrunde, welche dreidimensional ausgestaltet ist, ergeben sich daraus lokale Kraftkomponenten mit entsprechenden Richtungen. Aus der integralen Summe der einzelnen Kraftkomponenten können die Tragfähigkeitskomponenten des Lagers und damit die dreidimensionale Tragfähigkeit berechnet und für den jeweiligen Anwendungsfall ausgelegt werden.

Dadurch dass nun in einem einzigen hydrodynamischen Gleitlager sowohl axiale als auch radiale Lasten abtragbar sind, wird für die zu bewältigenden Lageraufgaben nur ein Maschinenelement konstruiert und produziert. Hierdurch ergibt sich eine deutliche Reduzierung des Teile- und Montageaufwandes. Dabei wird über die Nutzung der hydrodynamischen Druckerzeugung ein Verzicht auf die Zufuhr externer Energie, beispielsweise durch die Verwendung einer Pumpe zur Erzeugung hydrostatischen Druckes möglich. Dies senkt sowohl die Kosten für die Konstruktion, die Herstellung sowie die Betriebskosten. Dadurch, dass eine durchgehende Lagerkontur aus mehreren Konturabschnitten gebildet ist, bzw. die Rotor-Lagerfläche oder die Gegenfläche konvex bzw. konkav gewölbt ist, ergeben sich ein oder mehrere konvergierende Spalte und damit t axiale und radiale Tragfähigkeiten. Deren vektorielle Summe ist größer als die Tragfähigkeit vergleichbarer Lageranordnungen, bei denen ein Axiallager mit einem Radiallager kombiniert ist und diese separat zur Erzeugung einer Tragfähigkeit genutzt werden. Dies hat zur Folge, dass mit den erfindungsgemäßen hydrodynamischen Gleitlagern eine höhere Leistungsdichte auf geringerem Raum erzeugt werden kann. Weiterhin sinkt dadurch der erforderliche Materialbedarf für die Lageranordnung.

Gemäß einer bevorzugten Erfindungsvariante kann es vorgesehen sein, dass die Rotor-Lagerfläche und die Gegenfläche ein Mehrflächengleitlager, Kipp-Segmentlager ein Schwimmbuchsenlager oder ein zylindrisches Gleitlager aufweisen oder bilden.

Gemäß einer weiter bevorzugten Erfindungsvariante kann es vorgesehen sein, dass die Gestaltung der Rotor-Lagerfläche derart von der Gestaltung der Gegenfläche des Stators abweicht, das die Rotor-Lagerfläche und die Gegenfläche nicht im Flächenkontakt aneinanderliegen, insbesondere nicht vollflächig aneinanderliegen. Dies kann z.B. erfolgen, wenn der Rotor und der Stator auf Block fahren. Hierdurch wird verhindert, dass eine Geometrie vorliegt welche keinen hydrodynamischen Druck erzeugen kann, wodurch ohne unterstützende Maßnahmen ein Anlaufen des Lagers nicht oder nur schwierig möglich wäre.

Eine denkbare Erfindungsvariante ist dergestalt, dass von der Rotor-Lagerfläche und/oder der Gegenfläche, insbesondere einteilig angeformte Erhebungen vorstehen. Mit den Erhebungen kann bei entsprechender Gestaltung beispielsweise auch der vorstehende Effekt verwirklicht werden, wonach die Rotor-Lagerfläche und die Gegenfläche nicht vollflächig aneinander liegen. Darüber hinaus kann mit den Erhebungen der hydrodynamisch wirkende Spaltverlauf angepasst und das Betriebsverhalten des hydrodynamischen Lagers eingestellt werden. Beispielsweise können hierzu lokale Deformationen im Bereich der Rotor-Lagerfläche oder der Gegenfläche vorgenommen werden. Diese Deformationen können durch die Verformung infolge lokal generierter Druckspannungen bewirkt werden. Die Erhebungen sollten dabei vorteilhafter Weise kleiner sein als das radiale Lagerspiel.

Ein erfindungsgemäßes hydrodynamisches Gleitlager kann auch dergestalt sein, dass die Rotor-Lagerfläche und/oder die Gegenfläche Bereiche mit unterschiedlichem thermischem Ausdehnungskoeffizienten aufweist. Mit dieser Maßnahme kann abhängig von der am Lager anstehenden Temperatur der Spaltverlauf beeinflusst werden, wodurch sich eine Änderung des Tragverhaltens des hydrodynamischen Gleitlagers ergibt. Beispielsweise kann ein Anwendungsfall vorgesehen sein, bei dem gezielt bei einer Erhöhung der Temperatur die gesamte Lagertragfähigkeit oder nur ein Kraftanteil, beispielsweise die axiale Tragfähigkeit erhöht wird. Die thermischen Ausdehnungskoeffizienten können derart miteinander kombiniert werden, dass bei Temperaturänderungen in diesen Bereichen Erhebungen/ Vertiefungen entstehen, wrüber beispielsweise auch das Verhalten des Lagers den Betriebsbedingungen angepasst werden kann.

Zusätzlich oder alternativ kann es zu diesem Zweck auch vorgesehen sein, dass die Rotor-Lagerfläche und/oder die Gegenfläche Bereiche mit unterschiedlichem Elastizitätsmodul aufweisen. Dies hat zur Folge, dass im Spalt bei einer Veränderung des anstehenden Drucks im Schmiermittel Geometrieänderungen der Rotor-Lagerfläche oder der Gegenfläche entstehen. Hierdurch wird dann die Tragfähigkeit des Lagers beeinflusst.Denkbar ist auch, das Lagerverhalten den Betriebsbedingungen dadurch anzupassen, dass in der Rotor- Lagerfläche oder der Gegenfläche Ausnemungen, Löcher oder dergleichen vorgesehen sind. Auch hierdurch können Zonen unterschiedlicher thermischer Ausdehnung oder Elastizität gebildet werden.

Gemäß einer denkbaren Erfindungsvariante kann es vorgesehen sein, dass die Rotor-Lagerfläche oder die Gegenfläche zwei Konturabschnitte aufweist, die die Rotor-Lagerfläche oder die Gegenfläche in Richtung der Rotationsachse begrenzen, und dass zwischen diesen Konturabschnitten ein oder mehrere weitere Konturabschnitte angeordnet sind um die durchgehende Lagerkontur zu bilden. Hierdurch kann auf nahezu beliebige Lastfälle eine Lagerauslegung vorgenommen werden. Weiterhin ist es denkbar, dass die Rotor-Lagerfläche und/oder die Gegenfläche einen konvexen und einen konkaven Konturabschnitt aufweist, die mittelbar über einen weiteren Konturabschnitt oder unmittelbar ineinander übergeleitet sind. Mit den kombinierten konvexen und konkaven Konturabschnitten in der Lagerkontur können harmonische Übergänge gebildet werden, die eine Lagergestaltung ermöglichen, bei der eine große Anpassfähigkeit auf wechselnde Lagerbelastungen und /oder Lastrichtungen während des Betriebs möglich ist.

Im Rahmen der Erfindung kann es vorgesehen sein, dass die Rotor-Lagerfläche von einem drehfest mit dem Rotor verbundenen Rotorteil zumindest teilweise gebildet ist. Dies hat den Vorteil, dass die Rotor-Lagerfläche sehr passgenau gefertigt werden kann. Weiterhin ist es möglich einen Rotor mit dem separaten Rotorteil individuell und bausatzartig auf die jeweilige Lageraufgabe anzupassen.

Ein erfindungsgemäßes Gleitlager kann dergestalt sein, dass der Rotor einen dem Gleitlager zugeordneten Abweiser aufweist, der im Bereich eines Schmiermittelauslasses des Gleitlagers angeordnet ist. Mittels des Abweisers kann das im Gleitlager geführte Schmiermittel abgeführt werden. Es wird dabei über den Umfang des rotierenden Abweisers abgeschleudert. Es kann dann insbesondere auch gegen eine Fläche geschleudert werden, die mit dem Schmierstoff gekühlt wird, was beispielsweise bei Hochtemperaturanwendungen, wie sie auch bei Turboladern vorkommen einen zusätzlichen Vorteil bietet.

Erfindungsgemäß ist eine Schmiermittelversorgung vorgesehen, wobei über einen Schmiermittelkanal Schmiermittel einer Versorgungsleitung zuförderbar ist, dass die Versorgungsleitung mit dem konvergierenden Spalt in räumlicher Verbindung steht, und dass die Versorgungsleitung zwischen dem Rotor und dem Stator gebildet ist, oder dass sich die Versorgungsleitung durch den Stator bis hin zum Spaltbereich erstreckt. Hierdurch können kompakte bauende Lageranordnungen geschaffen werden.

Wenn die Versorgungsleitung zwischen dem Rotor und dem Stator gebildet ist, dann kann eine zuverlässige und gleichmäßige Schmiermittelversorgung insbesondere bei hohen Drehzahlen gewährleistet werden. Dabei wird eine besonders effektiv arbeitende Lageranordnung dann möglich, wenn vorgesehen ist, dass sich die Versorgungsleitung zwischen Rotor und Stator bis in den Spaltbereich zwischen Rotor und Stator, vorzugsweise in Form einer nutartigen Ausnehmung im Stator erstreckt.

Die Aufgabe der Erfindung wird auch gelöst mit einer Lageranordnung wobei der Rotor zwei in Rotorachsrichtung zueinander beabstandet angeordnete Lagerstellen aufweist, und wobei wenigstens eine der Lagerstellen von einem hydrodynamischen Gleitlager nach einem der Ansprüche 2 bis 10 gebildet ist. Dabei kann es insbesondere vorgesehen sein, dass der Stator von einem Gehäuseeinsatz gebildet ist, der die in Achsrichtung zueinander beabstandet angeordneten Gegenflächen der beiden hydrodynamischen Gleitlager bildet oder trägt. Hierdurch verringert sich der Teile- und Montageaufwand. Weiterhin können die Statoren der beiden Lagerstellen passgenau aufeinander abgestimmt werden.

Dabei kann eine Lageranordnung auch derart sein, dass der Stator zwei Ansätze aufweist, die die Konturabschnitte bilden, wobei die Ansätze über ein Mittelstück mittelbar oder unmittelbar verbunden sind. Mit dem Mittelstück kann der Lagerabstand zwischen den beiden Lagerstellen festgelegt werden. Das Mittelstück kann auch Zusatzfunktionen übernehmen. So ist es denkbar, dass das Mittelstück Führungskanäle für die Schmiermittelversorgung beider Lagerstellen aufweist.

Erfindungsgemäß können beide Lagerstellen mit den erfindungsgemäßen hydrodynamischen dreidimensionalen Gleitlager ausgestattet sein. Es ist jedoch auch möglich nur eines zu verwenden. Das andere kann dann vorzugsweise als hydrodynamisches Radiallager ausgeführt sein.

Die Erfindung wird im Folgenden anhand von in den Zeichnungen dargestellten Ausführungsbeispielen näher erläutert. Es zeigen:
- Fig. 1: in schematischer Darstellung ein hydrodynamisches Gleitlager mit einem Rotor und einem Stator in Schnittansicht,
- Fig. 2: eine weitere alternative Ausgestaltung eines hydrodynamischen Gleitlagers in Schnittansicht,
- Fig. 3 bis 6: weitere alternative Ausgestaltungsvarianten eines hydrodynamischen Gleitlagers, wobei der Stator im Schnitt gezeigt ist,
- Fig. 7: ein Detail eines Stators in vergrößerter Ansicht,
- Fig. 8 bis 11: verschiedene Ausführungsvarianten von Abgasturboladern in Seitenansicht und im Schnitt mit hydrodynamischen Gleitlagern,
- Fig. 12 und 13: zwei technische Ausgestaltungsvarianten zur Fixierung eines Stators, insbesondere in einem Gehäuse eines Abgasturboladers in Seitenansicht und im Schnitt,
- Fig. 14: eine Teilschnittdarstellung einer Lageranordnung eines Abgasturboladers und
- Fig. 15 bis 17: Details einer Schmiermittelversorgung für ein hydrodynamisches Gleitlager.

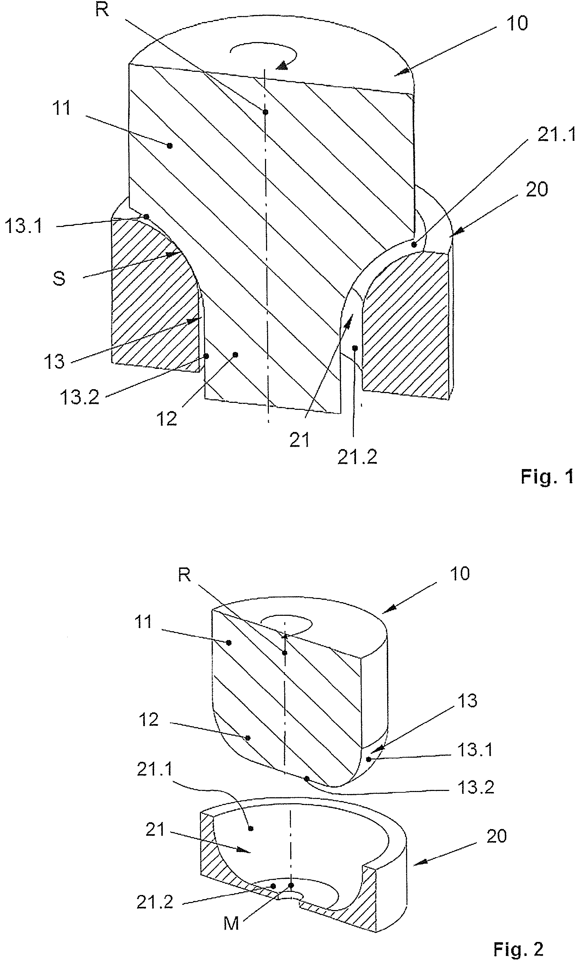

Fig. 1 zeigt ein hydrodynamisches Gleitlager mit einem Rotor 10 und einem Stator 20. Dabei ist eine Schnittdarstellung längs der Rotorachse R des Rotors 10 gewählt. Der Rotor 10 besitzt ein Anschlussstück 11 an das sich ein Lagerabschnitt 12 anschließt. An dem Anschlussstück 11 kann ein Maschinenbauteil, beispielsweise ein Zahnrad oder dergleichen mittelbar oder unmittelbar angekoppelt werden. Der Lagerabschnitt 12 besitzt eine insbesondere rotationssymetrische Rotor-Lagerfläche 13. Dabei bildet die Rotor-Lagerfläche eine durchgehende Lagerkontur. Diese Lagerkontur wird von zwei Konturabschnitten 13.1 und 13.2 derart gebildet, dass die Lagerkontur durchgängig ist. Entlang der Rotationsachse (Mittellängsachse) kann mithin im Rahmen der Erfindung der Abstand der Lagerkontur zur Rotatationsachse variieren..

Insbesondere ist, wie dies die Fig. 1 zeigt, im vorliegenden Ausführungsbeispiel die Lagerkontur stetig differenzierbar. Bei stetig differenzierbaren Lagerkonturen ist insbesondere eine einfache numerische Lagerberechnung möglich und es werden Tragfähigkeiten über die gesamte Lagerkontur hinweg möglich. Die Gegenfläche 21 kann ebenfalls rotationssymetrisch sein.

Der Stator 20 ist mit einer Aufnahme für den Rotor 10 gestaltet. Er weist eine Gegenfläche 21 auf. Diese Gegenfläche 21 bildet eine Lagerkontur, die von einer konvexen Wölbung und einem hohlzylindrischen Bereich erzeugt ist. Die konvexe Wölbung und der hohlzylindrische Bereich bilden Konturabschnitte 21.1 und 21.2. Die Gegenfläche 21 bildet ebenfalls eine durchgängige Lagerkontur und ist wie die Rotor-Lagerfläche 13 stetig differenzierbar.

Der Stator 20 ist im Rahmen der Erfindung derart angeordnet, dass zwischen dem Rotor 10 und dem Stator 20 eine Relativgeschwindigkeit zur hydrodynamischen Druckerzeugung erreicht werden kann. Der Stator 20 kann ortsfest eingebaut, oder ebenfalls drehbar, beispielsweise als Schwimmbuchse ausgebildet sein.

Im zusammengesetzten Zustand des hydrodynamischen Gleitlagers steht die Rotor-Lagerfläche 13 der Gegenfläche 21 gegenüber. Wie Fig. 1 erkennen lässt, kann die Lagerkontur der Rotor-Lagerfläche 13 von der Lagerkontur der Gegenfläche 21 geringfügig abweichen. Dies wird mit unterschiedlichen Wölbungen der Konturabschnitte 13.1 und 21.1 erzeugt. Mit dieser Maßnahme wird verhindert, dass die Rotor-Lagerfläche 13 und die Gegenfläche 21 flächig, insbesondere vollflächig aneinanderliegen, sodass eine Geometrie vorliegt welche keinen hydrodynamischen Druck erzeugen kann.

Fig. 1 symbolisiert eine Betriebsdarstellung des hydrodynamischen Gleitlagers, bei der sich durch die exzentrische Lage des Rotors 10 zum Stator 20 in der linken Bilddarstellung ein in axialer und radialer Richtung konvergierender Spalt S ergibt. Das zwischen der Rotor-Lagerfläche 13 und der Gegenfläche 21 geführte Schmiermittel erzeugt im Bereich des konvergierenden Spaltes einen Druck, der die Tragfähigkeit des hydrodynamischen Gleitlagers bestimmt. An jeder Stelle wirkt dabei der Druck normal zu der Rotor-Lagerfläche 13 bzw. der Gegenfläche 21. Dadurch ergeben sich sowohl axiale als auch radial zur Rotationsachse R wirkende Kraftkomponenten. Die integrale Summe dieser Kraftkomponenten bestimmt die Tragfähigkeit des Lagers sowohl in Axialrichtung als auch in Radialrichtung.

Fig. 2 zeigt eine weitere Ausgestaltungsvariante eines erfindungsgemäßen hydrodynamischen Gleitlagers. Dabei wird die Rotor-Lagerfläche 13 von zwei Konturabschnitten 13.1, 13.2, nämlich von einer konvexen Wölbung und einer Planfläche senkrecht zur Mittellängsachse gebildet. Die Gegenfläche 21 hat eine entsprechende Kontur (Konturabschnitte 21.1, 21.2).

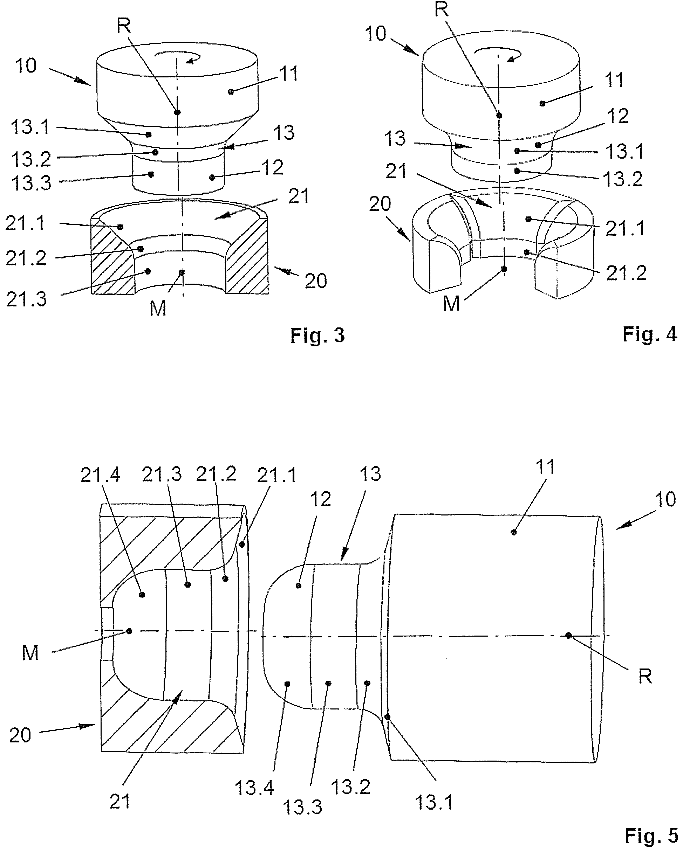

Fig. 3 zeigt eine weitere Ausgestaltung eines erfindungsgemäßen hydrodynamischen Gleitlagers. Der Rotor 10 besitzt dabei eine Rotor-Lagerfläche 13 mit drei Konturabschnitten 13.1, 13.2 und 13.3. Der Konturabschnitt 13.1 wird von einem Stumpfkegel gebildet. Der Konturabschnitt 13.3 ist zylindrisch ausgebildet. Der Übergangsbereich zwischen den Konturabschnitten 13.1 und 13.3 wird von einem Konturabschnitt 13.2 gebildet, der als konkave Wölbung ausgebildet ist. Dabei ist die Gestaltung derart, dass die Konturabschnitte 13.1 und 13.3 kontinuierlich ineinander übergehen. Damit ist die Lagerkontur 13 in Richtung der Rotationsachse R kontinuierlich differenzierbar.

Die Gegenfläche 21 des Stators 20 ist entsprechend aus drei Konturabschnitten 21.1 bis 21.3 zusammengesetzt. Der Konturabschnitt 21.1 ist als kegelförmige Aufnahme ausgebildet. An diesen Konturabschnitt 21.1 schließt sich der Konturabschnitt 21.2 als konvexe Wölbung an. Diese konvexe Wölbung geht in den Konturabschnitt 21.3 über, der als Hohlzylinder ausgebildet ist. In zusammengesetztem Zustand stehen sich die Konturabschnitte 13.1 und 21.1; 13.2 und 21.2 bzw. 13.3 und 21.3 gegenüber. Mit den Konturabschnitten 13.3 und 21.3 werden aufgrund der zylindrischen Ausbildung alleine Lagerkräfte in Radialrichtung erzeugt. Die Konturabschnitte 13.1 und 13.2 bzw. 21.1 und 21.2 dagegen erzeugen Kraftkomponenten sowohl in Radialrichtung als auch in Axialrichtung.

Fig.4 zeigt ein hydrodynamisches Mehrflächen- oder Segmentgleitlager bei dem die Rotor-Lagerfläche 13 aus zwei Konturabschnitten 13.1 und 13.2 durchgängig zusammengesetzt ist. Der Konturabschnitt 13.1 ist als konkave Wölbung ausgebildet an den sich der zylindrische Konturabschnitt 13.2 anschließt. Entsprechend ist die Gegenfläche 21 des Stators 20 mit zwei Konturabschnitten 21.1 und 21.2 gebildet. Der Konturabschnitt 21.1 ist als konvexe Wölbung ausgeführt. An diesem Konturabschnitt 21.1 schließt sich der Konturabschnitt 21.2 in Form eines Hohlzylinders an. Hier werden wieder im Bereich der Konturabschnitte 13.2 und 21.2 alleine Kräfte in Radialrichtung erzeugt. Im Bereich der Konturabschnitte 13.1 und 21.1 werden im konvergierenden Spalt S sowohl axiale als auch radiale Kraftkomponenten erzeugt.

Fig. 5 zeigt eine Gestaltung eines erfindungsgemäßen hydrodynamischen Gleitlagers bei dem die Rotor-Lagerfläche 13 aus vier Konturabschnitten 13.1 bis 13.4 durchgängig zusammengesetzt ist. Der Konturabschnitt 13.1 ist als Stumpfkegel mit relativ großem Öffnungswinkel ausgeführt. Der Konturabschnitt 13.2 schließt sich in Form einer konkaven Wölbung an. An den Konturabschnitt 13.2 schließt sich unmittelbar der Konturabschnitt 13.3 in Form eines Zylinders an. Der Konturabschnitt 13.3 geht in den Konturabschnitt 13.4 über, der als konvexe Wölbung ausgeführt ist. Der Stator 20 weist eine Gegenfläche 21 mit vier Konturabschnitten 21.1 und 21.4 auf. Der Konturabschnitt 21.1 bildet eine kegelförmige Aufnahme, die in eine konvexe Wölbung übergeht, die von dem Konturabschnitt 21.2 gebildet ist. An den Konturabschnitt 21.2 schließt sich der Konturabschnitt 21.3 in Form einer hohlzylindrischen Aufnahme an. Die Gegenfläche 21 schließt mit dem Konturabschnitt 21.4 in Form einer konkaven Wölbung ab. Im zusammengesetzten Zustand und im Betrieb erzeugt das in der Fig. 5 dargestellte hydrodynamische Gleitlager im Bereich der gegenüberstehenden Konturabschnitte 13.3 und 21.3 radiale Kraftkomponenten. Demgegenüber erzeugen die zugeordneten Konturabschnitte 13.1, 13.2, 13.4, 21.1, 21.2 und 21.4 sowohl radiale als auch axiale Kraftkomponenten.

Während des Betriebs der hydrodynamischen Gleitlager gemäß den Fig. 1 bis 5 bzw. den erfindungsgemäßen hydrodynamischen Gleitlagern kann die auf das hydrodynamische Gleitlager einwirkende externe Kraft bezüglich ihres Betrages und ihrer Richtung variieren. Infolge einer solchen Variation verändert sich auch die Zuordnung der Rotationsachse R des Rotors 10 zu der Mittellängsachse M des Stators 20. Dabei kann die Veränderung sowohl ein Winkelversatz zwischen der Rotorachse R und der Mittellängsachse M als auch ein Radialversatz oder ein Axialversatz sein. Insbesondere ist es vorstellbar, dass sämtliche Versatzarten gleichzeitig auftreten. Auf eine solche Veränderung kann das erfindungsgemäße hydrodynamische Gleitlager reagieren. Bei einer derartigen Verstellung des Rotors 10 gegenüber dem Stator 20 verändert sich die Lage und die Geometrie des konvergierenden Spalt S. Eine Veränderung des konvertierenden Spaltes S führt zu einer Veränderung der Kraftkomponenten im konvergierenden Spalt S, die die Tragfähigkeit des hydrodynamischen Gleitlagers bestimmen. Wirkt beispielsweise bei dem hydrodynamischen Gleitlager gemäß Fig. 5 eine erhöhte Axialkraft auf den Rotor 10 ein, so verändert sich der konvergierende Spalt im Bereich der Konturabschnitte 13.1, 13.2, 13.4 bzw. 21.1, 21.2 und 21.4. Aufgrund dieser Veränderung der Geometrie des hydrodynamischen Spaltes werden höhere Drücke in diesen Bereichen erzielt, die zu einer Vergrößerung der axialen Tragfähigkeit führen. Somit kann die einwirkende Axialkraft kompensiert werden. Gleiche Effekte werden bei sich ändernden Radiallasten bzw. einer Verstellung der Rotationsachse R zu der Mittellängsachse M wirksam.

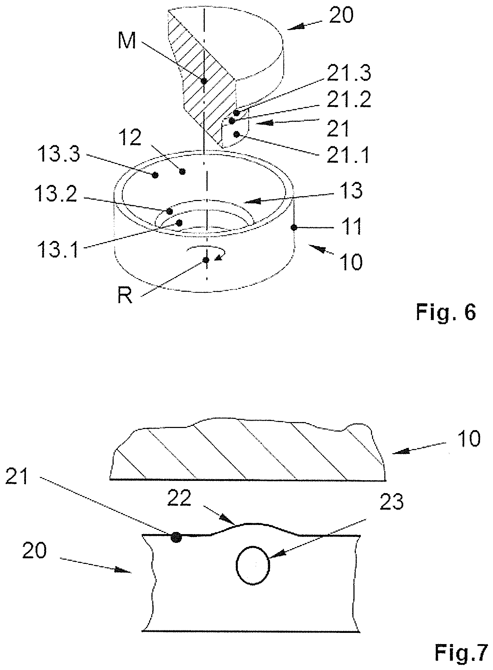

Fig. 6 zeigt ein Gleitlager, gemäß Fig. 3, wobei jedoch nun der Stator 20 und der Rotor 10 vertauscht sind.

In Fig. 7 ist eine Detaildarstellung eines Bereiches des Rotors 10 und des Stators 20 gezeigt. Dabei ist der in Fig. 7 gezeigte Teilbereich des Stators 20 beispielsweise ein Teil des Konturabschnittes 21 gemäß Fig. 1-6. Wie die Fig. 7 erkennen lässt, ist in den Stator 20 eine Bohrung 23 oder dergleichen Ausnehmung eingebracht. Diese Bohrung oder Ausnehmung 23 ist vorzugsweise bis in den Bereich des konvergierenden Spaltes S geführt. Wenn nun in der Bohrung oder Ausnehmung 23 ein Druck erzeugt wird, beispielsweise durch Eintreiben eines Stabes, so entsteht an der Lagerkontur, insbesondere im Bereich des hydrodynamischen wirksamen Spaltes S eine plastische oder elastische Verformung, die eine Erhebung 22 bildet. Dementsprechend wird also die Oberfläche der Gegenfläche 21 gezielt verformt. Abhängig von der Geometrie der Bohrung bzw. Ausnehmung 23 und des Druckes, lässt sich die Kontur der Erhebung 22 gezielt beeinflussen. Mittels der Erhebung 22 kann der Spaltverlauf und damit die hydrodynamische Druckerzeugung insbesondere im konvergierenden Spalt S gezielt beeinflusst werden. Mit dieser Maßnahme lässt sich eine weitere individuelle Anpassung des hydrodynamischen Gleitlagers an die anstehende Lageraufgabe bewirken. Selbstverständlich kann die Erhebung 22 auch am Rotor 10 vorgenommen werden. Weiterhin ist es möglich auch mehrere Erhebungen 22 am Rotor 10 und/oder Stator 20 vorzusehen.

Im Rahmen der Erfindung ist es weiterhin möglich, die Druckerzeugung im konvergierenden Spalt S zu verändern, wobei im Bereich des hydrodynamischen Spaltes S die Rotor-Lagerfläche 13 und/oder die Gegenfläche 21, Bereiche mit unterschiedlichem thermischem Ausdehnungskoeffizienten und/oder unterschiedlichem Elastizitätsmodul aufweisen können. Hierzu können die Rotor-Lagerfläche 13 und/oder die Gegenfläche 21, Zonen mit unterschiedlichen Materialien aufweisen. Beispielsweise kann im Bereich des konvergierenden Spaltes S eine Ausnehmung, insbesondere eine Bohrung vorgesehen sein, die in den Rotor 10 und/oder in den Stator 20 eingebracht ist. Diese Ausnehmung kann dann mit einem Material ausgefüllt sein, das einen anderen thermischen Ausdehnungskoeffizient und/oder einen anderen Elastizitätsmodul als das umgebende Material des Rotors 10 bzw. Stators 20 aufweist. Beispielsweise kann in die Ausnehmung ein Harzmaterial eingebracht sein, das Oberflächenbündig mit der Rotor-Lagerfläche 13 oder der Gegenfläche 21 abschließt. Denkbar ist es auch dass die Rotor-Lagerfläche 13 und/oder die Gegenfläche 21 Bereiche mit unterschiedlichem thermischem Ausdehnungskoeffizienten aufweisen, wobei insbesondere vorgesehen sein kann, dass in der Rotor-Lagerfläche und/oder der Gegenfläche ein Teilelement, insbesondere bestehend aus Oxidkeramik, oder aus einem anderen Element das einen niedrigeren thermischen Ausdehnungskoeffizienten aufweist, als der an das Teilelement mittelbar oder unmittelbar anschließende Bereich der Rotor-Lagerfläche und/oder der Gegenfläche. Beispiele für ein solches Teilelement sind Zirkoniumwolframat, Silizium, Titan, Stahl/Eisen. Die Rotor-Lagerfläche 13 und/oder die Gegenfläche 21 kann beispielsweise zumindest teilweise aus einem Bronzematerial, beispielsweise mit einem thermischen Ausdehnungskoeffizienten von ca. 18e-6 1/K gebildet sein.

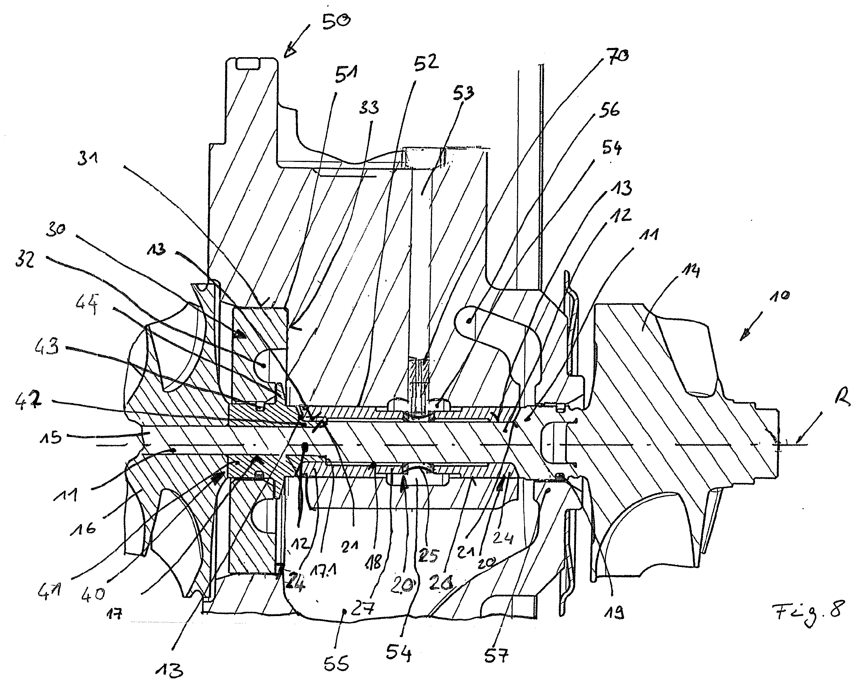

In den Fig. 8 bis 11 sind verschiedene Ausführungsvarianten von erfindungsgemäßen Abgasturboladern gezeigt, bei denen die vorbeschriebenen erfindungsgemäßen hydrodynamischen Gleitlager zum Einsatz kommen.

Wie Fig. 8 zeigt, weist der Abgasturbolader einen Rotor 10 auf. Der Rotor 10 besitzt eine Welle 15, die an ihren Wellenenden Anschlussstücke 11 aufweist. Das eine Anschlussstück 11 trägt ein Turbinenrad 14. Das andere Anschlussstück 11 ein Verdichterrad 16.

Der Rotor 10 weist zwei Lagerabschnitte 12 auf, die in Achsrichtung der Welle 15 zueinander beabstandet angeordnet sind. Dabei werden im Bereich der Lagerabschnitte 12 Rotor-Lagerflächen 13 gebildet. Im Rahmen der Erfindung können die Rotor-Lagerflächen 13 entweder einteilig mit der Welle 15 ausgebildet sein. Denkbar ist es jedoch auch, dass die Rotor-Lagerfläche 13 von einem insbesondere drehfest mit der Welle 15 verbundenen Lagerstück gebildet ist. So ist beispielsweise bei dem in Fig. 8 dargestellten Abgasturbolader die Rotor-Lagerfläche 13, welche dem Turbinenrad 14 zugeordnet ist einteilig an der Welle 15 ausgebildet. Der linksseitige Lagerabschnitt 12 wird von einem Rotorteil 40 gebildet, der drehfest mit der Welle 15 verbunden ist. Das Rotorteil 40 weist ein Basisteil 41 auf, das von einer Aufnahme durchdrungen ist. Mit dieser Aufnahme kann das Rotorteil 40 auf eine Sitzfläche 17 der Welle 15 aufgeschoben werden. Die Aufschiebbewegung lässt sich dabei beispielsweise durch einen Absatz 17.1 der Welle 15 begrenzen an der das Rotorteil 40 axial anschlägt. Vorzugsweise ist das Rotorteil 40 mittels eines Passsitzes auf der Welle 15 axial gesichert. Das Rotorteil 40 weist einen Lagerabschnitt 42 auf, der einteilig an das Basisteil 41 angeformt ist. Der Lagerabschnitt 42 bildet die Rotor-Lagerfläche 13 des linksseitigen Lagerabschnitts 12.

Im Rahmen der Erfindung kann es vorgesehen sein, dass eine Rotor-Lagerfläche 13 nicht alleine nur von der Welle 15 oder dem Rotorteil 40 gebildet ist. Vielmehr kann auch eine Rotor-Lagerfläche 13 vorgesehen sein, die sich sowohl über einen Teil der Welle 15 als auch einen Teil des Rotorteils 40 hinweg erstreckt.

Das Rotorteil 40 kann weiterhin eine umlaufende Dichtungsaufnahme 43, beispielsweise in Form einer umlaufenden Nut und einen Abweiser 44 aufweisen.

Der Rotor 10 ist in einem Gehäuse 50, vorzugsweise dem Aufnahmegehäuse des Abgasturboladers gehalten. Das Gehäuse 50 ist von einer Lageraufnahme 52 durchdrungen. In diese Lageraufnahme 52 ist ein Stator 20 eingesetzt. Dabei kann der Stator 20, wie Fig. 8 zeigt als buchsenförmiger Einsatz ausgebildet sein. Der Stator 20 weist an seinen längsseitigen Enden Ansätze 24 auf. Die radial Außenflächen der Ansätze 24 können im Wesentlichen zylindrisch ausgebildet sein. Die Ansätze 24 bilden Konturabschnitte 21.1 bis 21.4 die Konturabschnitten 13.1 bis 13.3 der Rotor-Lagerflächen 13 gegenüberstehen. Dementsprechend können erfindungsgemäß die Rotor-Lagerfläche 13 und die Gegenfläche 21 des Stators 20, wie oben erwähnt als durchgehende Lagerkonturen ausgebildet sein, um über die gesamte Lagerkontur hinweg axiale- und/oder radiale Tragfähigkeiten zu verwirklichen.

Die beiden Ansätze 24 sind über ein Mittelstück 27 einteilig miteinander verbunden.

Für die Montage wird der Rotor 10 mit montiertem Turbinenrad 14 in der Bildebene gemäß Fig. 8 von rechts nach links in das Gehäuse 50 eingeschoben. Der Stator 20 ist dabei ortsfest im Gehäuse 50 vormontiert. Dementsprechend wird die Welle 15 durch den Stator 20 hindurchgeschoben, bis die Rotor-Lagefläche 13 des rechtsseitigen Lagerabschnitts 12 der Gegenfläche 21 des Stators 20 gegenübersteht. Beim Einschieben des Rotors 10 gelangt dann auch eine in eine umlaufende Dichtungsaufnahme 19 eingelegte Dichtung in den Bereich einer Dichtfläche des Gehäuses 50. Anschließend kann von der linken Seite her das Rotorteil 40 auf die Welle 15 aufgeschoben werden, bis es an dem Absatz 17.1 anschlägt. Dann steht die Rotor-Lagerfläche 13 des Rotorteils 40 der linksseitigen Gegenfläche 21 des Stators 20 gegenüber. In die umlaufende Dichtungsaufnahme 43 des Rotorteils 40 kann eine Dichtung eingelegt werden. Dann wird ein Lagerstück 30 über das Rotorteil 40 geschoben. Das Lagerstück 30 kann in Form eines Deckels ausgebildet sein. Es ist mit einer Umfangsfläche 31 abgedichtet in eine Ausnehmung 51 des Gehäuses 50 eingesetzt. Die passgenaue Montage des Lagerstücks 30 wird mit einem Anschlag 33 des Lagerstücks 30 gewährleistet, der an einer Gegenfläche des Gehäuses 50 im Montagezustand anliegt. Das Lagerstück 30 weist einen Ableitbereich 32 auf, der in Form eines Schleuderkanals umlaufend in die Innenkontur des Lagerstücks 30 eingebracht sein kann. Abschließend wird das Verdichterrad 16 auf die Welle 15 aufgeschoben und daran befestigt. Dabei schlägt das Verdichterrad 16 an dem Rotorteil 40 an und ist sowohl axial als auch radial unverschiebbar gegenüber der Welle 15 fixiert.

In einem alternativen Montageverfahren, kann der Stator 20 auf der Welle 15 vormontiert werden und im Paket in das Lagergehäuse geschoben werden, wo der Stator 20 anschließend in axialer Richtung bezüglich des Gehäuses 50 fixiert wird.

In einer alternativen Ausbildung, kann das Lagerstück 30 wegfallen. Bei dieser nicht gezeigten Ausführung weist das Rotorteil 40 aus Montagegründen keine Abweiser 44 auf. Das Rotorteil 40 kann aber weiterhin eine umlaufende Dichtungsaufnahme 43, beispielsweise in Form einer umlaufenden Nut zur Aufnahme eines Dichtungsrings aufweisen. Der Dichtungsring liegt dann am Gehäuse 50 statt am Lagerstück 30 an.

Wie Fig. 8 weiter erkennen lässt, ist in das Gehäuse 50 ein Schmiermittelkanal 53 eingebracht. Der Schmiermittelkanal 53 mündet in einem Verteilerraum 54, der umlaufend um das Mittelstück 27 des Stators 20 herum im Gehäuse 50 ausgeformt ist. Der Stator 20 besitzt Durchbrüche 25. Diese schaffen eine räumliche Verbindung zwischen dem Verteilerraum 54 und einem zwischen Rotor 10 und Stator 20 angeordneten Hohlraum 18. Der Hohlraum 18 führt von den Durchbrüchen 25 in axialer Richtung der Welle 15 hin zu den beiden Lagerabschnitten 12. Der Hohlraum 18 steht in räumlicher Verbindung mit dem Spaltbereich, der zwischen den Rotor-Lagerflächen 13 und den Gegenflächen 21 der Lagerabschnitte 12 gebildet ist. Dementsprechend kann ein Betriebsmittel, insbesondere ein Schmiermittel über den Schmiermittelkanal 53 zu den beiden hydrodynamischen Gleitlagern zugefördert werden. Wenn nun während des Betriebseinsatzes der Rotor 10 relativ zum Stator 20 gedreht wird, entsteht ein hydrodynamischer Druckaufbau im Spaltbereich der beiden Lagerabschnitte 12. Dabei wird kontinuierlich Schmiermittel über den Schmiermittelkanal 53 und den Hohlraum 18 zu den Lagerabschnitten 12 gefördert. Das Schmiermittel durchsetzt dabei die beiden hydrodynamischen Gleitlager. Im Anschluss an den Spaltbereich des linken hydrodynamischen Gleitlagers gelangt das Schmiermittel dann in den Bereich des Rotorteils 40 und wird über den Abweiser 44 radial nach außen abgeschleudert. Dabei gelangt dann das Schmiermittel in den Ableitbereich 32 des Lagerstücks 30. Dann läuft das Schmiermittel in Schwerkraftrichtung ab und wird in einem Hohlraum 55 des Gehäuses gesammelt.

Bei dem rechtsseitigen hydrodynamischen Gleitlager wird das Schmiermittel im Anschluss an den Spaltbereich des Gleitlagers von dem Anschlussstück 11 radial nach außen abgeschleudert. Das Schmiermittel gelangt dabei in den Bereich eines Ableitbereichs 56, der in dem Gehäuse 50 ausgeformt ist. Das Schmiermittel läuft dann in Schwerkraftrichtung nach unten ab und wird ebenfalls in dem Hohlraum 55 gesammelt. Sowohl mit dem Ableitbereich 32 des Lagerstücks 30 als auch insbesondere mit dem Ableitbereich 56 im Bereich des Turbinenrads 14 wird eine Gehäusekühlung mit dem Schmiermittel erreicht. Dies stellt einen erheblichen Zusatznutzen dar. Insbesondere kann dann über das Schmiermittel ein während des Betriebseinsatzes auftretender Wärmeeintrag abgeleitet und von den Lagerstellen 12 ferngehalten werden. Hierdurch kann bei Hochtemperaturanwendungen die Betriebssicherheit der hydrodynamischen Gleitlager garantiert werden. Insbesondere wird verhindert, dass das Schmiermittel dann im Bereich der Lagerabschnitte 12 einer unzulässigen Temperaturbelastung ausgesetzt wird.

Der Stator 20 wird bei der Ausführungsform in Fig. 8 durch einen in den Durchbruch 25 des Mittelstücks 27 eingreifenden Pin 70 axial und drehfixiert. Der Pin kann vorteilhafter Weise im Gehäuse 50 in der Ölversorgungsbohrung (Schmiermittelversorgung 35) positioniert werden und greift in den Durchbruch 25 des Stators 20 hinein.

Das Schmiermittel wird im Hohlraum 55 gesammelt und gegebenenfalls über einen Wärmetauscher und einer Pumpe wieder zurück in den Schmiermittelkanal 53 gefördert.

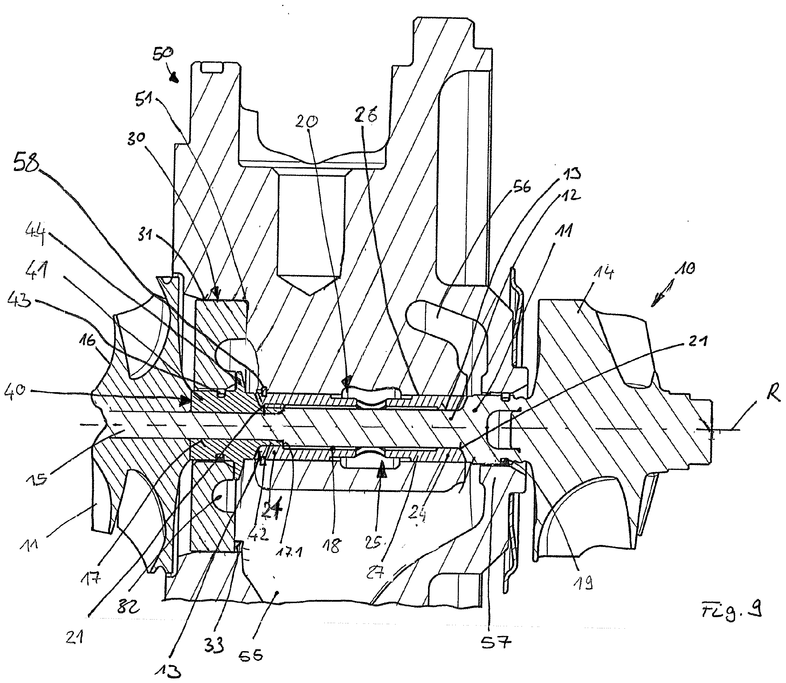

Der Stator 20 gemäß Fig. 9 ist in dem Gehäuse 50 mit einem Fixierelement 58 gehalten. Das Fixierelement 58 kann dabei beispielsweise von einem Sicherungsring gebildet sein, wie Fig. 9 erkennen lässt.

Im Übrigen entspricht die technische Ausgestaltung des Abgasturboladers gemäß Fig. 9 der gemäß Fig. 8, so dass auf die vorstehenden Ausführungen Bezug genommen werden kann.

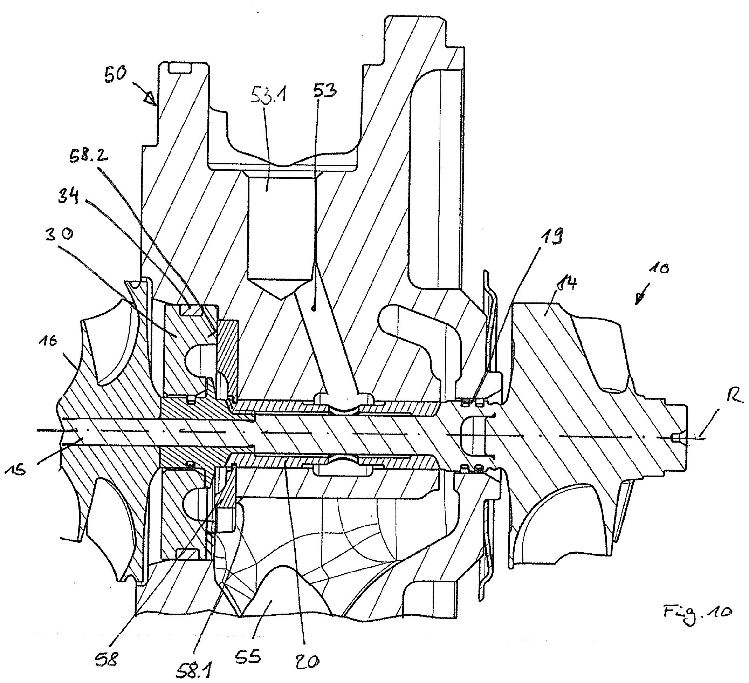

Fig. 10 zeigt eine weitere Ausgestaltungsvariante eines Abgasturboladers, die im Wesentlichen der Gestaltung gemäß Fig. 8 bzw. Fig. 9 entspricht, so dass auf die vorstehenden Ausführungen Bezug werden kann und nur auf die Unterschiede eingegangen wird.

Wie Fig. 10 erkennen lässt, ist für eine verbesserte Dichtwirkung im Bereich des Stützabschnitts 57 des Gehäuses 50 eine Doppeldichtung mit zwei Dichtaufnahmen 19 verwendet.

Der Schmiermittelkanal 53 geht von einer Zuleitung 53.1 des Gehäuses 50 aus. Diese kann in Form einer Anschlussverschraubung ausgeführt sein.

Der Stator 20 ist mittels eines Fixierelements 58 sowohl in Umfangsrichtung als auch in Achsrichtung gehalten. Das Fixierelement 58 weist einen Basiskörper 58.3 auf, der eine Sitzfläche 58.1 und eine Stützfläche 58.2 aufweist. An den Basiskörper 58.3 ist ein Fixieransatz 58.4 angeschlossen. Der Fixieransatz 58.4 greift in eine Fixieraufnahme des Stators 20 ein um diesen zu sichern. Hierzu kann das Fixierelement 58 zweiteilig ausgebildet sein um die Fixieransätze 58.4 in die umlaufende Nut des Stators 20 einsetzen zu können. Denkbar ist es jedoch auch, dass der Fixieransatz 58.4 als elastisch auslenkbares Rastelement an dem einteiligen Fixierelement 58 angebracht ist. Das Fixierelement 58 ist derart ausgebildet, dass sowohl axiale Kräfte als auch Kräfte in Umfangsrichtung aufgenommen werden können, um den Stator in axialer Richtung und in Umfangsrichtung zu fixieren.

Wie Fig. 10 erkennen lässt, bildet das Fixierelement 58 im Anschluss an den Spaltbereich des hydrodynamischen Gleitlagers eine Ausförderkontur. Diese gewährleistet, dass das Schmiermittel über das Fixierelement 58 in den Ableitbereich 32 des Lagerstücks 30 gelangt.

Schließlich gibt Fig. 10 zu erkennen, dass das Lagerstück 30 an seinem Außenumfang eine Dichtung 34 trägt. Damit lässt sich das Lagerstück 30 zuverlässig gegenüber dem Gehäuse 50 abdichten. Das Fixierelement 58 ist in eine Aufnahme des Gehäuses 50 derart eingesetzt, dass es mit seiner Sitzfläche 58.1 an einer Gegenfläche des Gehäuses 50 anschlägt. Die Stützfläche 58.2 dient als Abstützung für den Anschlag 33 des Lagerstücks 30.

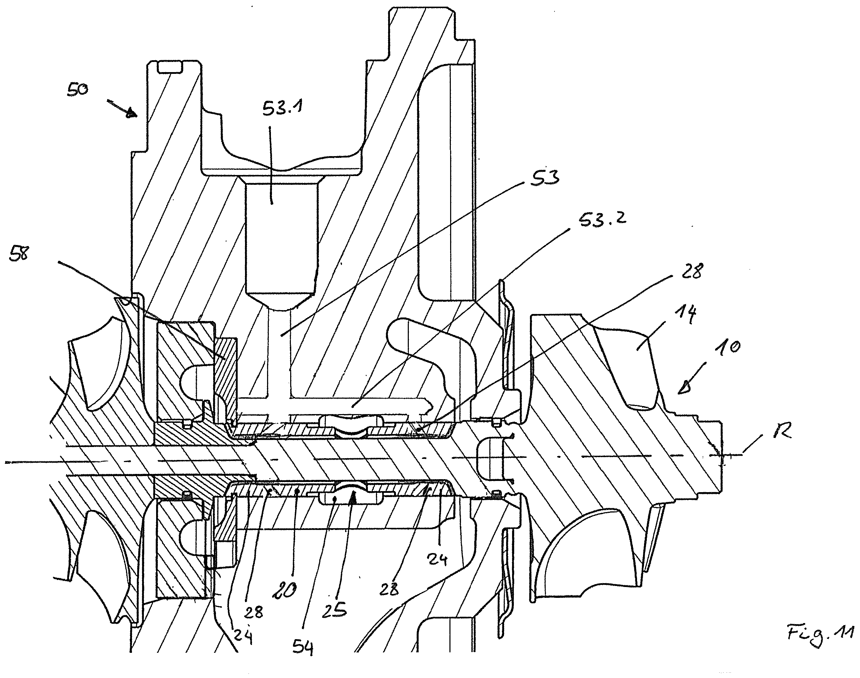

Fig. 11 zeigt eine weitere Ausführungsvariante eines Abgasturboladers, wobei die Gestaltung dieses Abgasturboladers der des Abgasturboladers gemäß Fig. 10 im Wesentlichen entspricht, so dass auf die vorstehenden Ausführungen Bezug genommen werden kann.

Im Unterschied zu dem Abgasturbolader gemäß Fig. 10 weist der Abgasturbolader gemäß Fig. 11 eine modifizierte Schmiermittelversorgung auf. Dementsprechend ist eine Zuleitung 53.1 vorgesehen, die in den Schmiermittelkanal 53 mündet. Der Schmiermittelkanal 53 geht in zwei Versorgungsleitungen 53.2 über. Die Versorgungsleitungen 53.2 münden in Zuführungen 28 des Stators 20. Die Zuführungen 28 stehen in räumlicher Verbindung mit dem Spaltbereich der beiden hydrodynamischen Gleitlager zum Zwecke der Schmiermittelversorgung.

Wie vorstehend bereits erwähnt wurde, kann der der Stator 20 auf unterschiedliche Weisen im Gehäuse 50 axial und drehfest verbunden sein.

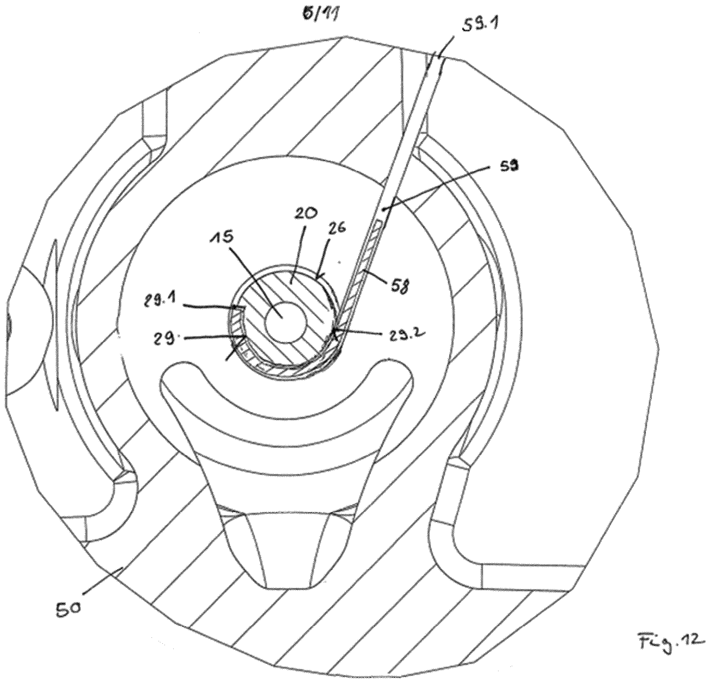

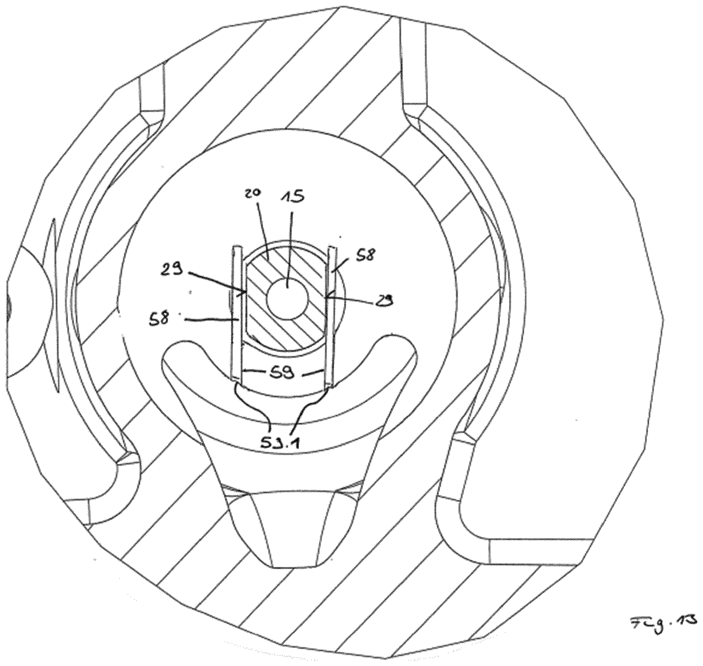

Fig. 12 und 13 zeigen zwei weitere Varianten zur Fixierung des Stators 20.

Wie Fig. 12 veranschaulicht, kann in das Gehäuse 50 ein Führungskanal 59 eingebracht sein, der über eine Öffnung 59 mit der Umgebung in Verbindung steht. Gegenüberliegend der Öffnung 59.1 mündet die Führung 59 in einen Hohlraum der zwischen dem Stator 20 und dem zugeordneten Gehäuseabschnitt des Gehäuses 50 gebildet ist. Dabei wird dieser Hohlraum von einem Absatz in der Außenkontur des Stators 20 gebildet. Dementsprechend entsteht eine Aufnahme 29. Durch die Öffnung 59.1 kann nun ein Fixierelement 58 in die Führung 59 eingeschoben werden. Das Fixierelement 58 kann dabei von einem biegbaren Bauteil, beispielsweise einem Drahtabschnitt gebildet sein. Das Fixierelement 58 gelangt über die Führung 59 in den Bereich der Aufnahme 29 und wird hierbei vorzugsweise plastisch entsprechend der Kontur der Aufnahme 29 deformiert. Die Einsetzbewegung des Fixierelements 58 wird durch einen Anschlag 29.1 und einen Anschlag 29.2 des Stators 20 begrenzt. Beim Einschieben des Fixierstücks 58 gelangt dieses zunächst in den Bereich des Anschlags 29.1 und verdreht den Stator 20 in der Statoraufnahme des Gehäuses 50 soweit, bis der Anschlag 29.2 ebenfalls am Fixierelement 58 anliegt, wie die Zeichnung zeigt. Damit ist der Stator in Umfangsrichtung festgelegt. Die Festlegung in Achsrichtung kann dadurch erfolgen, dass die Aufnahme 29 nutförmig ausgebildet ist, so dass der Stator 20 nicht mehr gegenüber dem Fixierelement 58 in Achsrichtung ausweichen kann.

Fig. 13 zeigt eine weitere Ausgestaltungsvariante, bei der in das Gehäuse 50 zwei Führungen 59 in Form von Kanälen eingebracht sind. Diese Kanäle münden wieder in Aufnahmen 29. Die Aufnahmen 29 sind als Rücksprünge im Stator 20 ausgebildet. In die Führungen 59 lassen sich wieder Fixierelemente 58, beispielsweise in Form von Drahtabschnitten einführen. Die Fixierelemente 58 liegen an Formschrägen, beispielsweise Abflachungen des Stators 20 an und fixieren damit den Stator 20 in Umfangsrichtung. Eine Fixierung in Achsrichtung kann wiederum dadurch erfolgen, dass die Aufnahmen 29 nutförmig ausgebildet sind. Die Führungen 59 sind im Gehäuse 50 vorzugsweise derart positioniert, dass die Fixierelemente 58 durch eine Ölablaufbohrung (unten in Fig. 13) in die Führungen eingeführt werden können. Dadurch kann eine zusätzliche Montagebohrung vermieden werden. Die Aufnahmen 29 sind vorzugsweise mittig im Stator 20 positioniert. Die Verwendung von zwei Fixierlementen 59 hat den Vorteil, dass bei axialer Kräfte kein Drehmoment auf den Rotor 10 wirkt, da die Kräfte mittig im Bezug auf den Rotor 10 aufgenommen werden.

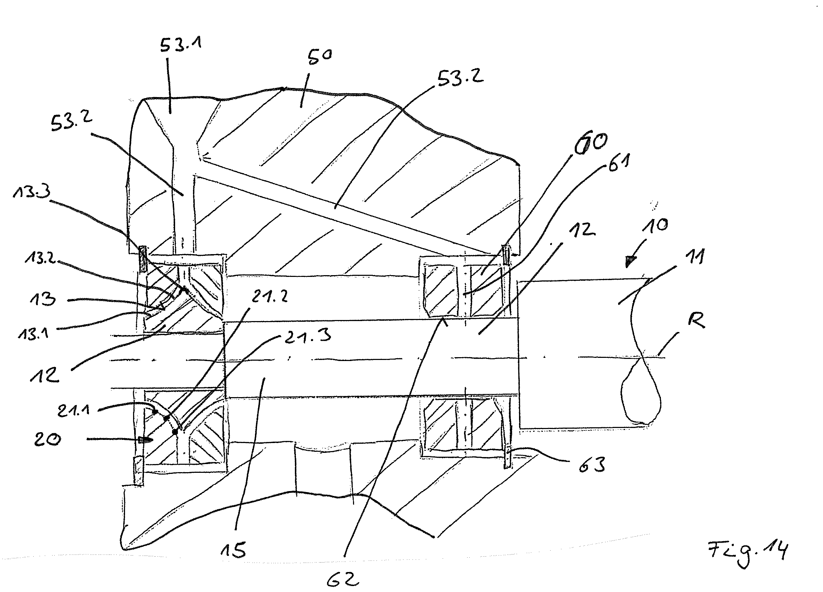

Fig. 14 zeigt eine weitere Ausgestaltungsvariante eines hydrodynamischen Gleitlagers, insbesondere für den Einsatz bei einem Abgasturbolader. Dabei sind wieder zwei hydrodynamische Gleitlager verwendet, die die Lagerabschnitte 12 bilden. Das linksseitige hydrodynamische Gleitlager weist in Übereinstimmung mit der Erfindung eine Rotor-Lagerfläche 13 auf, die aus mehreren Konturabschnitten 13.1 bis 13.4 zusammengesetzt ist. Der Stator 20 weist eine Gegenfläche 21 auf, die ebenfalls mehrere Konturabschnitte 21.1 bis 21.4 aufweist. Das rechtsseitige hydrodynamische Gleitlager 60 ist als gängiges Radiallager ausgeführt. In das Gehäuse 50 ist eine Zuleitung 53.1 eingebracht, die in Versorgungsleitungen 53.2 mündet. Die Versorgungsleitungen 53.2 stehen in räumlicher Verbindung mit Zuführungen 28, 61 der Statoren der hydrodynamischen Gleitlager um eine Schmiermittelversorgung im hydrodynamischen Spalt zu erreichen.

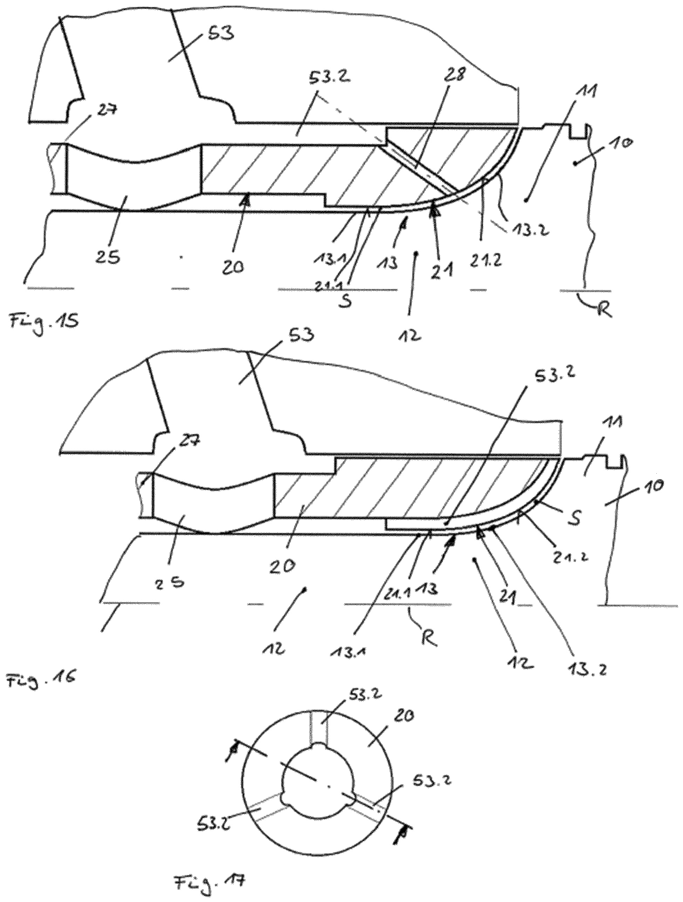

In den Fig. 15 bis 17 sind verschiedene Varianten von hydrodynamischen Gleitlagern gemäß der Erfindung bei einem Abgasturbolader nach Fig. 10 näher verdeutlicht. Selbstverständlich können diese hydrodynamischen Gleitlager auch bei anderen Abgasturboladern, insbesondere den übrigen in den Figuren beschriebenen Abgasturboladern eingesetzt werden.

Wie Fig. 15 erkennen lässt, besitzt der Stator 20 das Mittelstück 27 an dem der Ansatz 24 angeformt ist. Der Ansatz 24 bildet die Gegenfläche 21 mit den Konturabschnitten 21.1, 21.2. Weiterhin ist zwischen dem Stator 20 und dem Gehäuse 50 eine Versorgungsleitung 53.2 gebildet. Die Versorgungsleitung 53.2 ist durch einen Abschnitt des Stators 20 gebildet, der einen geringeren Außendurchmesser als im Bereich der Ansätze 24 aufweist. Die Versorgungsleitung 53.2 mündet in der Zuführung 28. Die Zuführung 28 wiederum steht in räumlicher Verbindung mit dem Spaltbereich S des hydrodynamischen Gleitlagers. Gegenüberliegend den Konturabschnitten 21.1, 21.2 bildet der Rotor 10 die Konturabschnitte 13.1, 13.2. Die Konturabschnitte 13.1, 13.2, 21.1, 21.2 gehen ineinander stetig differenzierbar über. Das Mittelstück 27 weist einen Durchbruch 25 auf. Der Stator 20 bildet im Übergangsbereich zu dem Rotor 10 einen Rücksprung, der eine weitere Versorgungsleitung 53.3 schafft. Über die beiden Versorgungsleitungen 53.2, 53.3 kann dem Spaltbereich S Schmiermittel von dem Schmiermittelkanal 53 zugefördert werden.

Fig. 16 zeigt eine Variante einer Schmiermittelversorung, bei der zwischen dem Rotor 10 und dem Stator 20 wieder eine Versorgungsleitung 53.3 gebildet ist, die in räumlicher Verbindung mit dem Schmiermittelkanal 53 steht (Durchbruch 25). In den Rotor 10 und/oder den Stator 20 sind Eintiefungen eingebracht, die Versorgungsleitungen 53.2 bilden. Dementsprechend sind die Versorgungsleitungen 53.2 teilweise oder vollständig über die gesamte Lagerkontur hinweg zwischen Rotor 10 und Stator 20 ausgebildet. Damit kann eine Schmiermittelversorgung über den Schmiermittelkanal 53, die Versorgungsleitung 53.3 direkt über die Versorgungsleitung 53.2 in den Spaltbereich S des hydrodynamischen Gleitlagers hinein erfolgen. In einer weiteren Ausführungsform sind die Eintiefungen 53.2 im Stator 20 über die Leitkontur der Lagerung folgend. Die Eintiefungen 53.2 im Stator 20 gehen also ohne Unterbrechung vom Radiallagerbereich in den Axiallagerbereich über. Die Nutkontur (Kurvenzug) ist als stetig differenzierbare Funktion im Wirkbereich definiert.

Fig. 17 zeigt den Stator 20 gemäß Fig. 16 in Stirnansicht von rechts, wobei der in Fig. 15 gezeigte Schnittverlauf durch den Stator 20 angegeben ist.

## Patentansprüche

1. Abgasturbolader mit einem hydrodynamisches Gleitlager mit einem Rotor (10) und einem Stator (20), wobei der Rotor (10) gegenüber dem Stator (20) drehbar ist, wobei eine Rotor-Lagerfläche (13) einer Gegenfläche (21) des Stators (20) zur hydrodynamischen Druckerzeugung im Bereich eines konvergierenden Spaltes gegenübersteht, wobei eine Schmiermittelversorgung vorgesehen ist, wobei über einen Schmiermittelkanal (53) Schmiermittel einer Versorgungsleitung (53.2) zuförderbar ist, wobei die Versorgungsleitung (53.2) mit dem konvergierenden Spalt (S) in räumlicher Verbindung steht, und wobei die Versorgungsleitung (53.2) zwischen dem Rotor (10) und dem Stator (20) gebildet ist, oder wobei sich die Versorgungsleitung (53.2) durch den Stator (20) bis hin zum Spaltbereich erstreckt,
**dadurch gekennzeichnet,**
**dass** die Rotor-Lagerfläche (13) und/oder die Gegenfläche (21) bei einem Schnitt längs und durch die Rotationsachse (R) in Schnittansicht, eine durchgehende Lagerkontur bildet, die aus wenigstens zwei Konturabschnitten (13.1 - 13.5, 21.1 - 21.4) gebildet ist, die als eine Gerade und eine Wölbung ausgebildet sind, um hydrodynamische Tragfähigkeiten in radialer und axialer Richtung zu erzeugen.

2. Hydrodynamisches Gleitlager mit einem Rotor (10) und einem Stator (20), wobei der Rotor (10) gegenüber dem Stator (20) drehbar ist, wobei eine Rotor-Lagerfläche (13) einer Gegenfläche (21) des Stators (20) zur hydrodynamischen Druckerzeugung im Bereich eines konvergierenden Spaltes gegenübersteht, wobei eine Schmiermittelversorgung vorgesehen ist, wobei über einen Schmiermittelkanal (53) Schmiermittel einer Versorgungsleitung (53.2) zuförderbar ist, wobei die Versorgungsleitung (53.2) mit dem konvergierenden Spalt (S) in räumlicher Verbindung steht, und wobei die Versorgungsleitung (53.2) zwischen dem Rotor (10) und dem Stator (20) gebildet ist, oder wobei sich die Versorgungsleitung (53.2) durch den Stator (20) bis hin zum Spaltbereich erstreckt,
**dadurch gekennzeichnet,**
**dass** die Rotor-Lagerfläche (13) und/oder die Gegenfläche (21) bei einem Schnitt längs und durch die Rotationsachse (R) in Schnittansicht, eine durchgehende Lagerkontur bildet, die aus wenigstens zwei Konturabschnitten (13.1 - 13.5, 21.1 - 21.4) gebildet ist, die als eine Gerade und eine Wölbung ausgebildet sind, um hydrodynamische Tragfähigkeiten in radialer und axialer Richtung zu erzeugen.

3. Turbolader nach Anspruch 1 oder hydrodynamisches Gleitlager nach Anspruch 2,
**dadurch gekennzeichnet,**
**dass** die Gestaltung der Rotor-Lagerfläche (13) derart von der Gestaltung der Gegenfläche (21) des Stators (20) abweicht,
**dass** die Rotor-Lagerfläche (13) und die Gegenfläche (21) nicht im Flächenkontakt aneinander liegen, insbesondere nicht vollflächig aneinander liegen und /oder
**dass** von der Rotor-Lagerfläche (13) und/oder der Gegenfläche (21) insbesondere einteilig angeformte Erhebungen (22) vorstehen.

4. Turbolader nach Anspruch 1 oder 3 oder hydrodynamisches Gleitlager nach einem der Ansprüche 2 oder 3,
**dadurch gekennzeichnet,**
**dass** die Rotor-Lagerfläche (13) und die Gegenfläche (21) ein Mehrflächengleitlager, Kipp-Segmentlager, Schwimmbuchsenlager oder ein zylindrisches Gleitlager aufweisen oder bilden.

5. Turbolader nach Anspruch 1 oder 3 oder 4 oder hydrodynamisches Gleitlager nach einem der Ansprüche 2 bis 4,
**dadurch gekennzeichnet,**
**dass** die Rotor-Lagerfläche (13) und/oder die Gegenfläche (21) Bereiche mit unterschiedlichem thermischem Ausdehnungskoeffizienten aufweisen, wobei insbesondere vorgesehen sein kann, dass in der Rotor-Lagerfläche (13) und/oder der Gegenfläche (21) ein Teilelement, insbesondere bestehend aus Oxidkeramik, oder aus einem anderen Element das einen niedrigeren thermischen Ausdehnungskoeffizienten aufweist, als der an das Teilelement mittelbar oder unmittelbar anschließende Bereich der Rotor-Lagerfläche (13) und/oder der Gegenfläche (21) und/oder,
**dass** die Rotor-Lagerfläche (13) und/oder die Gegenfläche (21) Bereiche mit unterschiedlichem Elastizitätsmodul aufweisen.

6. Turbolader nach Anspruch 1 oder 3 bis 5 oder hydrodynamisches Gleitlager nach einem der Ansprüche 2 bis 5,
**dadurch gekennzeichnet,**
**dass** die Rotor-Lagerfläche (13) und/oder die Gegenfläche (21) zwei oder mehrere Konturabschnitte (21.1, 21.2, 21.3) aufweist, die die Rotor-Lagerfläche (13) oder die Gegenfläche (21) in Richtung der Rotationsachse (R) begrenzen,
und **dass** zwischen diesen Konturabschnitten (21.1, 21.3) ein oder mehrere weitere Konturabschnitte (21.2) angeordnet sind um die durchgehende, stetig differenzierbare Lagerkontur zu bilden und insbesondere um über die gesamte Lagerkontur hinweg Tragfähigkeiten in axialer und/oder radialer Richtung zu ermöglichen.

7. Turbolader nach Anspruch 1 oder 3 bis 6 oder hydrodynamisches Gleitlager nach einem der Ansprüche 2 bis 6,
**dadurch gekennzeichnet,**
**dass** die Rotor-Lagerfläche (13) und/oder die Gegenfläche (21) mindestens einen konvexen und einen konkaven Konturabschnitt (21.1, 21.2, 21.3) aufweist, die mittelbar über einen weiteren Konturabschnitt (21.2) oder unmittelbar ineinander übergeleitet sind.

8. Turbolader nach Anspruch 1 oder 3 bis 7 oder hydrodynamisches Gleitlager nach einem der Ansprüche 2 bis 7,
**dadurch gekennzeichnet,**
**dass** die Rotor-Lagerfläche (13) von einem drehfest mit dem Rotor (10) verbundenen Rotorteil (40) zumindest teilweise gebildet ist.

9. Turbolader nach Anspruch 1 oder 3 bis 8 oder hydrodynamisches Gleitlager nach einem der Ansprüche 2 bis 8,
**dadurch gekennzeichnet,**
**dass** der Rotor (10) einen dem Gleitlager zugeordneten Abweiser (44) aufweist, der im Bereich eines Schmiermittelauslasses des Gleitlagers angeordnet ist.

10. Turbolader nach Anspruch 1 oder 3 bis 9 oder hydrodynamisches Gleitlager
nach einem der Ansprüche 2 bis 9,
**dadurch gekennzeichnet,**
**dass** sich die Versorgungsleitung (53.2) zwischen Rotor (10) und Stator (20) bis in den Spaltbereich zwischen Rotor (10) und Stator (20), vorzugsweise in Form einer nutartigen Ausnehmung im Stator (20) erstreckt.

11. Lageranordnung mit einem Rotor (10) und einem Stator (20), wobei der Rotor (10) gegenüber dem Stator (20) drehbar ist, wobei eine Rotor-Lagerfläche (13) einer Gegenfläche (21) des Stators (20) zur hydrodynamischen Druckerzeugung im Bereich eines konvergierenden Spalts (S) gegenübersteht,
**dadurch gekennzeichnet,**
**dass** der Rotor (10) zwei in Rotorachsrichtung zueinander beabstandet angeordnete Lagerstellen aufweist, wobei wenigstens eine der Lagerstellen von einem hydrodynamischen Gleitlager nach einem der Ansprüche 2 bis 10 gebildet ist.

12. Lageranordnung nach Anspruch 11,
**dadurch gekennzeichnet,**
**dass** der Stator (20) von einem Gehäuseeinsatz gebildet ist, der die in Achsrichtung zueinander beabstandet angeordneten Gegenflächen (21) der beiden hydrodynamischen Gleitlager bildet oder trägt, wobei insbesondere vorgesehen sein kann,
**dass** der Stator (20) zwei Ansätze (24) aufweist, die die Konturabschnitte (21.1 - 21.4) bilden, wobei die Ansätze (24) über ein Mittelstück (27) mittelbar oder unmittelbar verbunden sind.

13. Lageranordnung nach einem der Ansprüche 11 oder 12,
**dadurch gekennzeichnet,**
**dass** eine der Lagerstellen von einem hydrodynamischen Radiallager gebildet ist.

14. Lageranordnung nach Anspruch 11 bis 13,
**dadurch gekennzeichnet,**
**dass** mittels einer Schmiermittelversorgung Schmiermittel gleichzeitig beiden Gleitlagern zugeführt ist.

15. Abgasturbolader mit einer Lageranordnung nach einem der Ansprüche 11 bis 14, wobei insbesondere vorgesehen sein kann,
dass der Gehäuseeinsatz, welcher die Gegenflächen (21) bildet oder trägt mittels eines Passsitzes oder einem Axialwellen-Sicherungsring oder einem sonstigen Fixierelement (58) in einem Gehäuse (50) gesichert gehalten ist.

## Claims

1. Exhaust gas turbocharger with a hydrodynamic plain bearing with a rotor (10) and a stator (20), wherein the rotor (10) is rotatable relative to the stator (20), wherein a rotor bearing surface (13) faces a counter surface (21) of the stator (20) for hydrodynamic pressure generation in the region of a converging gap, wherein a lubricant supply is provided, wherein lubricant can be supplied to a supply line (53. 2) via a lubricant channel (53), the supply line (53.2) being spatially connected to the converging gap (S), and the supply line (53.2) being formed between the rotor (10) and the stator (20), or the supply line (53.2) extending through the stator (20) to the gap region,
**characterized in**
**that** the rotor bearing surface (13) and/or the counter surface (21), when cut longitudinally and through the axis of rotation (R) in sectional view, forms a continuous bearing contour formed by at least two contour sections (13.1 - 13.5, 21.1 - 21.4) formed as a straight line and a curvature to produce hydrodynamic load carrying capacities in radial and axial directions.

2. Hydrodynamic plain bearing with a rotor (10) and a stator (20), wherein the rotor (10) is rotatable relative to the stator (20), wherein a rotor bearing surface (13) faces a counter surface (21) of the stator (20) for hydrodynamic pressure generation in the region of a converging gap, wherein a lubricant supply is provided, wherein lubricant can be supplied to a supply line (53. 2) via a lubricant channel (53), the supply line (53.2) being spatially connected to the converging gap (S), and the supply line (53.2) being formed between the rotor (10) and the stator (20), or the supply line (53.2) extending through the stator (20) to the gap region,
**characterized in that** the rotor bearing surface (13) and/or the counter surface (21), when cut longitudinally and through the axis of rotation (R) in sectional view, forms a continuous bearing contour which is formed from at least two contour sections (13.1 - 13.5, 21.1 - 21.4) which are designed as a straight line and a curvature, in order to generate hydrodynamic load-bearing capacities in the radial and axial directions.

3. Turbocharger according to claim 1 or hydrodynamic plain bearing according to claim 2,
**characterized**
**in that** the design of the rotor bearing surface (13) deviates from the design of the counter surface (21) of the stator (20) in such a way,
**in that** the rotor bearing surface (13) and the counter surface (21) do not lie in surface contact with one another, in particular do not lie against one another over their entire surface, and/or
**in that** projections (22) protrude from the rotor bearing surface (13) and/or the counter surface (21), in particular integrally formed projections (22).

4. Turbocharger according to claim 1 or 3 or hydrodynamic plain bearing according to one of claims 2 or 3,
**characterized in**
**that** the rotor bearing surface (13) and the counter surface (21) have or form a multisurface plain bearing, tilting pad bearing, floating bush bearing or a cylindrical plain bearing.

5. Turbocharger according to claim 1 or 3 or 4 or hydrodynamic plain bearing according to any of claims 2 to 4,
**characterized in**
**that** the rotor bearing surface (13) and/or the counter surface (21) have regions with different coefficients of thermal expansion, it being possible in particular for provision to be made in the rotor bearing surface (13) and/or the counter surface (21) for a partial element, in particular consisting of oxide ceramic, or of another element which has a lower coefficient of thermal expansion than the region of the rotor bearing surface (13) and/or of the counter surface (21) which directly or indirectly adjoins the partial element and/or in the region of the rotor bearing surface (13) and/or of the counter surface (21) which directly or indirectly adjoins the partial element and/or in that the rotor bearing surface (13) and/or the counter surface (21) have regions with different modulus of elasticity.

6. Turbocharger according to claim 1 or 3 to 5 or hydrodynamic plain bearing according to one of claims 2 to 5,
**characterized**
**in that** the rotor bearing surface (13) and/or the counter surface (21) has two or more contour sections (21.1, 21.2, 21.3) which bound the rotor bearing surface (13) or the counter surface (21) in the direction of the axis of rotation (R)
and **in that** one or more further contour sections (21.2) are arranged between these contour sections (21.1, 21.3) in order to form the continuous, continuously differentiable bearing contour and, in particular, in order to permit load-bearing capacities in the axial and/or radial direction over the entire bearing contour.

7. Turbocharger according to claim 1 or 3 to 6 or hydrodynamic plain bearing according to one of the claims 2 to 6,
**characterized**
**in that** the rotor bearing surface (13) and/or the counter surface (21) has at least one convex and one concave contour section (21.1, 21.2, 21.3), which are transferred indirectly into one another via a further contour section (21.2) or directly into one another.

8. Turbocharger according to claim 1 or 3 to 7 or hydrodynamic plain bearing according to one of claims 2 to 7,
**characterized**
**in that** the rotor bearing surface (13) is at least partially formed by a rotor part (40) connected to the rotor (10) in a rotationally fixed manner.

9. Turbocharger according to claim 1 or 3 to 8 or hydrodynamic plain bearing according to one of claims 2 to 8,
**characterized**
**in that** the rotor (10) has a deflector (44) which is associated with the plain bearing and is arranged in the region of a lubricant outlet of the plain bearing.

10. Turbocharger according to claim 1 or 3 to 9 or hydrodynamic plain bearing according to one of claims 2 to 9,
**characterized**
**in that** the supply line (53.2) between rotor (10) and stator (20) extends into the gap region between rotor (10) and stator (20), preferably in the form of a groove-like recess in the stator (20).

11. Bearing arrangement having a rotor (10) and a stator (20), the rotor (10) being rotatable relative to the stator (20), a rotor bearing surface (13) facing a counter surface (21) of the stator (20) for hydrodynamic pressure generation in the region of a converging gap (S),
**characterized**
**in that** the rotor (10) has two bearing positions arranged at a distance from one another in the axial direction of the rotor, at least one of the bearing positions being formed by a hydrodynamic plain bearing according to one of Claims 2 to 10.

12. Bearing arrangement according to claim 11,
**characterized**
**in that** the stator (20) is formed by a housing insert which forms or supports the counter surfaces (21), arranged at a distance from one another in the axial direction, of the two hydrodynamic plain bearings, it being possible, in particular, for provision to be made that the stator (20) has two lugs (24) which form the contour sections (21.1 - 21.4), wherein the lugs (24) are connected indirectly or directly via a center piece (27).

13. Bearing arrangement according to one of claims 11 or 12,
**characterized**
**in that** one of the bearing positions is formed by a hydrodynamic radial bearing.

14. Bearing arrangement according to claim 11 to 13,
**characterized**
**in that** lubricant is supplied to both plain bearings simultaneously by means of a lubricant supply.

15. Exhaust gas turbocharger with a bearing arrangement according to one of claims 11 to 14, wherein it can be provided in particular, that the housing insert which forms or supports the counter surfaces (21) is held securely in a housing (50) by means of a fit or an axial shaft locking ring or other fixing element (58).

## Revendications

1. Turbocompresseur à gaz d'échappement avec un palier lisse hydrodynamique avec un rotor (10) et un stator (20), dans lequel le rotor (10) peut tourner par rapport au stator (20), dans lequel une surface de palier de rotor (13) est tournée vers une contre-surface (21) du stator (20) pour la génération d'une pression hydrodynamique dans la zone d'un interstice convergent, dans lequel une alimentation en lubrifiant est prévue, dans lequel le lubrifiant peut être amené à une conduite d'alimentation (53. 2) par un canal de lubrifiant (53), la conduite d'alimentation (53.2) étant reliée spatialement à l'entrefer convergent (S), et la conduite d'alimentation (53.2) étant formée entre le rotor (10) et le stator (20), ou la conduite d'alimentation (53.2) s'étendant à travers le stator (20) jusqu'à la zone de l'entrefer,
**caractérisé**
**en ce que** la surface de palier (13) du rotor et/ou la contre-surface (21) forme, en coupe longitudinale et en coupe transversale à travers l'axe de rotation (R), un contour de palier continu qui est formé d'au moins deux sections de contour (13.1 - 13.5, 21.1 - 21.4) qui sont conçues comme une ligne droite et une courbure afin de produire des capacités de charge hydrodynamiques dans les directions radiale et axiale.

2. Palier lisse hydrodynamique avec un rotor (10) et un stator (20), dans lequel le rotor (10) peut tourner par rapport au stator (20), dans lequel une surface de palier (13) du rotor est tournée vers une contre-surface (21) du stator (20) pour générer une pression hydrodynamique dans la zone d'un interstice convergent, dans lequel une alimentation en lubrifiant est prévue, dans lequel le lubrifiant peut être amené à une conduite d'alimentation (53.2) par un canal de lubrifiant (53), la conduite d'alimentation (53.2) étant reliée spatialement à l'entrefer convergent (S), et la conduite d'alimentation (53.2) étant formée entre le rotor (10) et le stator (20), ou la conduite d'alimentation (53.2) s'étendant à travers le stator (20) jusqu'à la zone de l'entrefer,
**caractérisé**
**en ce que** la surface de palier (13) du rotor et/ou la contre-surface (21) forme, en coupe longitudinale et en coupe transversale à travers l'axe de rotation (R), un contour de palier continu qui est formé d'au moins deux sections de contour (13.1 - 13.5, 21.1 - 21.4) qui sont conçues comme une ligne droite et une courbure, afin de les capacités de charge hydrodynamiques dans les directions radiale et axiale.

3. Turbocompresseur selon la revendication 1 ou palier lisse hydrodynamique selon la revendication 2,
**caractérisé**
**en ce que** la conception de la surface de palier du rotor (13) s'écarte de la conception de la contre-surface (21) du stator (20) de telle manière
**en ce que** la surface de palier du rotor (13) et la contre-surface (21) ne sont pas en contact superficiel l'une avec l'autre, en particulier ne sont pas en contact l'une avec l'autre sur toute leur surface, et/ou
**en ce que** des saillies (22) dépassent de la surface de palier du rotor (13) et/ou de la contre-surface (21), en particulier des saillies (22) formées d'un seul tenant.

4. Turbocompresseur selon la revendication 1 ou 3 ou palier lisse hydrodynamique selon l'une des revendications 2 ou 3,
**caractérisé**
**en ce que** la surface de palier du rotor (13) et la contre-surface (21) comprennent ou forment un palier lisse multi-surfaces, un palier à coussinet basculant, un palier à coussinet flottant ou un palier lisse cylindrique.

5. Turbocompresseur selon la revendication 1 ou 3 ou 4 ou palier lisse hydrodynamique selon l'une des revendications 2 à 4,
**caractérisé**
**en ce que** la surface de palier du rotor (13) et/ou la contre-surface (21) présentent des zones à coefficients de dilatation thermique différents, un élément partiel, notamment en céramique oxydée, ou un autre élément qui présente un coefficient de dilatation thermique plus faible que la zone de la surface de palier du rotor (13) et/ou de la contre-surface (21) qui est directement ou indirectement adjacente à l'élément partiel, pouvant notamment être prévu dans la surface de palier du rotor (13) et/ou la contre-surface (21), et/ou que la surface de palier du rotor (13) et/ou la contre-surface (21) présentent des zones à coefficients de dilatation thermique différents et/ou en ce que la surface de palier du rotor (13) et/ou la contre-surface (21) présentent des régions avec un module d'élasticité différent.

6. Turbocompresseur selon la revendication 1 ou 3 à 5 ou palier lisse hydrodynamique selon l'une des revendications 2 à 5,
**caractérisé**
**en ce que** la surface de palier du rotor (13) et/ou la contre-surface (21) présente deux ou plusieurs sections de contour (21.1, 21.2, 21.3) qui délimitent la surface de palier du rotor (13) ou la contre-surface (21) dans la direction de l'axe de rotation (R),
et **en ce qu'**une ou plusieurs autres sections de contour (21.2) sont disposées entre ces sections de contour (21.1, 21.3) afin de former le contour de palier continu et continuellement différenciable et, en particulier, afin de permettre des capacités de charge dans la direction axiale et/ou radiale sur l'ensemble du contour de palier.

7. Turbocompresseur selon la revendication 1 ou 3 à 6 ou palier lisse hydrodynamique selon l'une des revendications 2 à 6,
**caractérisé**
**en ce que** la surface de palier du rotor (13) et/ou la contre-surface (21) présente au moins une section de contour convexe et une section de contour concave (21.1, 21.2, 21.3), qui sont transmises indirectement l'une à l'autre par une autre section de contour (21.2) ou directement.

8. Turbocompresseur selon la revendication 1 ou 3 à 7 ou palier lisse hydrodynamique selon l'une des revendications 2 à 7,
**caractérisé**
**en ce que** la surface de palier du rotor (13) est au moins partiellement formée par une partie de rotor (40) reliée au rotor (10) de manière fixe en rotation.

9. Turbocompresseur selon la revendication 1 ou 3 à 8 ou palier lisse hydrodynamique selon l'une des revendications 2 à 8,
**caractérisé**
**en ce que** le rotor (10) comporte un déflecteur (44) associé au palier lisse, lequel déflecteur est disposé dans la zone d'une sortie de lubrifiant du palier lisse.

10. Turbocompresseur selon la revendication 1 ou 3 à 9 ou palier lisse hydrodynamique selon l'une des revendications 2 à 9,
**caractérisé**
**en ce que** la conduite d'alimentation (53.2) entre le rotor (10) et le stator (20) s'étend dans la zone de l'entrefer entre le rotor (10) et le stator (20), de préférence sous la forme d'un évidement en forme de rainure dans le stator (20).

11. Dispositif de palier comprenant un rotor (10) et un stator (20), le rotor (10) pouvant tourner par rapport au stator (20), une surface de palier (13) du rotor étant tournée vers une contre-surface (21) du stator (20) pour la production d'une pression hydrodynamique dans la zone d'un interstice convergent (S),
**caractérisé**
**en ce que** le rotor (10) présente deux locations de palier disposés à distance l'un de l'autre dans la direction axiale du rotor, au moins un des locations de palier étant formé par un palier lisse hydrodynamique selon l'une des revendications 2 à 10.

12. Disposition des roulements selon la revendication 11,
**caractérisé**
**en ce que** le stator (20) est formé par un insert de boîtier qui forme ou soutient les contre-surfaces (21), disposées à distance l'une de l'autre dans la direction axiale, des deux paliers lisses hydrodynamiques, des dispositions pouvant notamment être prises,
**en ce que** le stator (20) comporte deux pattes (24) qui forment les sections de contour (21.1 - 21.4), les pattes (24) étant reliées indirectement ou directement par une pièce centrale (27).

13. Arrangement de roulement selon l'une des revendications 11 ou 12,
caractérisé
ce que l'un des emplacements du palier est formé par un palier radial hydrodynamique.

14. Disposition des roulements selon les revendications 11 à 13,
caractérisé
en ce sens que le lubrifiant est fourni aux deux paliers lisses simultanément par le biais d'une alimentation en lubrifiant.

15. Turbocompresseur de gaz d'échappement avec un arrangement de palier selon l'une des revendications 11 à 14, dans lequel il peut être fourni en particulier,
que l'insert de boîtier qui forme ou soutient les contre-surfaces (21) est maintenu solidement dans un boîtier (50) au moyen d'un ajustement serré ou d'une bague de retenue d'arbre axial ou d'un autre élément de fixation (58).
